# EUROPÄISCHE PATENTSCHRIFT

(11) **EP 4 097 803 B1**
(45) Veröffentlichungstag und Bekanntmachung des Hinweises auf die Patenterteilung: **17.06.2026**
(21) Anmeldenummer: 21702853.9
(22) Anmeldetag: 18.01.2021
(51) Int. Cl.: H01R 13/518, H01R 13/74, H01R 13/514, H01R 13/629, H01R 13/52, F16B 21/08

(54) **ANBAUGEHÄUSE**
ADD-ON HOUSING
BOÎTIER RAPPORTÉ

(30) Priorität: 27.01.2020 DE 102020101812
(43) Veröffentlichungstag der Anmeldung: 07.12.2022
(73) Patentinhaber: HARTING Electric Stiftung & Co. KG, 32339 Espelkamp (DE)
(72) Erfinder: FERDERER, Albert, 32339 Espelkamp (DE); MEIER, Heiko, 32339 Espelkamp (DE); HACKEMEIER, Florian, 32339 Espelkamp (DE)
(86) Internationale Anmeldenummer: PCT/DE2021/100051
(87) Internationale Veröffentlichungsnummer: WO 2021/151426

(56) Entgegenhaltungen:
- EP-A1- 3 012 922
- US-A- 5 238 427
- US-A1- 2008 311 800
- US-A1- 2009 098 768
- US-B1- 7 607 930

## Beschreibung

Die Erfindung geht aus von einem Anbaugehäuse nach der Gattung des unabhängigen Anspruchs 1. Die Erfindung bezieht sich ebenfalls auf ein Verfahren zur Installation eines Anbaurahmens gemäß des unabhängigen Anspruchs 8.

Derartige Anbaugehäuse werden im industriellen Umfeld eingesetzt. Die Anbaugehäuse beherbergen einen Kontakteinsatz oder einen mit Steckverbindermodulen bestückten Halterahmen, der die betreffenden Geräte mit elektrischer Energie und/oder Signalen versorgt.

### Stand der Technik

Die DE 10 2015 106 963 B4 zeigt ein an einer Gerätewand befestigtes Anbaugehäuse, welches an seinen Schmalseiten jeweils Befestigungsflächen mit jeweils zwei Schrauböffnungen, zur Fixierung des Anbaugehäuses an die Gerätewand, aufweist. Derartige Schraubbefestigung sind sowohl bei der Installation als auch bei der Wartung des Gerätes umständlich handhabbar. Dennoch werden sie seit Jahrzehnten verwendet.

Die EP 3 012 922 A1 zeigt eine Schwenkhebelanordnung zur Sicherung einer aus mindestens einem ersten und einem zweiten Gehäuseteil bestehenden Gehäuseanordnung, wobei der Schwenkhebel von einer Freigabeposition in eine Verrieglungsposition überführbar ist.

Die US 5,238,427 A1 zeigt einen elektrischen Verbinder zum Anbringen in einer Öffnung einer Platte oder dergleichen. Der Verbinder ist über eine am Verbinder angreifende, separate Montagevorrichtung in der Öffnung fixierbar.

Das Deutsche Patent- und Markenamt hat in der Prioritätsanmeldung zu vorliegender Anmeldung den folgenden Stand der Technik recherchiert: DE 42 28 531 C2, US 6,319,022 B1, DE 34 06 741 A1 und DE 10 2015 106 963 B4.

### Aufgabenstellung

Die Aufgabe der Erfindung besteht darin einen Anbauflansch bereitzustellen, der einfach installiert und gewartet werden kann.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Das erfindungsgemäße Anbaugehäuse weist eine rahmenförmige Grundform mit einem rechteckigen Querschnitt auf. Die umlaufend erhabene Rahmenwandung erstreckt sich im Wesentlichen senkrecht zur Gerätewand.

Das Anbaugehäuse weist einen Aufnahmebereich, zur Aufnahme eines Kontakteinsatzes oder eines mit Steckverbindermodulen bestückten Halterahmens, auf. Dieser Aufnahmebereich wird von der zuvor erwähnten Rahmenwandung umschlossen bzw. geschützt. Der Aufnahmebereich kann mit Hilfe eines Gehäusedeckels verschlossen werden, wenn kein Steckverbinder angeschlossen ist.

Das Anbaugehäuse kann einen Verriegelungsbügel aufweisen, über welchen ein angeschlossener Steckverbinder reversibel fixierbar ist.

An der rahmenförmigen Grundform des Anbaugehäuses sind zumindest zwei Befestigungsflächen mit Befestigungsöffnungen angeformt. Vorzugsweise sind die Befestigungsflächen an den Schmalseiten des Anbaugehäuses vorgesehen.

Das Anbaugehäuse weist Schnappbefestigungsmittel auf, die zur mechanischen Befestigung des Anbaugehäuses an einem Wanddurchbruch einer Gerätewand, die Befestigungsöffnungen durchgreifen. Mit den Schnappbefestigungsmitteln können die Anbaugehäuse werkzeuglos an einer Gerätewand montiert werden. Zu Wartungszwecken können die Anbaugehäuse einfach wieder von der Gerätewand entfernt werden und anschließend genauso einfach wieder daran befestigt werden.

In einer bevorzugten Ausgestaltung der Erfindung weisen die Schnappbefestigungsmittel jeweils einen kastenförmigen Grundkörper mit einem rechteckigen Querschnitt auf. Aus den sich gegenüberliegenden Schmalflächen des kastenförmigen Grundkörpers ragen federnd gelagerte Fußteile heraus. Wenn die Schnappbefestigungsmittel vollständig in die Befestigungsöffnungen eingeführt sind, stützen sich die Fußteile innenseitig an der Gerätewand ab, wodurch das Anbaugehäuse an der Gerätewand befestigt ist.

Die Federkraft ist so gerichtet, dass die Fußteile stetig aus dem kastenförmigen Grundkörper herausgedrückt werden. Presst man die Fußteile, entgegen der Federkraft, in den kastenförmigen Grundkörper der Schnappbefestigungsmittel ein, so kann das Anbaugehäuse von der Gerätewand wieder entfernt werden.

Vorzugsweise weisen die Schnappbefestigungsmittel einen über ihre nach außen gerichtete Fläche zugänglichen Mechanismus auf, mit welchen die Fußteile, entgegen der Federkraft, nach innen (in den kastenförmigen Grundkörper zurück) führbar sind. Dadurch kann das Anbaugehäuse wieder von der Gerätewand entfernt werden, ohne dass man ins Geräteinnere gelangen muss. Dies erhöht die Wartungsfreundlichkeit des erfindungsgemäßen Anbaugehäuses nochmals.

Vorzugsweise sind die Befestigungsöffnungen des Anbaugehäuses, analog zum Querschnitt des Schnappbefestigungsmittels, rechteckig ausgebildet. Dabei ist die Befestigungsöffnung nur unwesentlich größer als der Querschnitt des Schnappbefestigungsmittels ausgestaltet. Derartige Befestigungsöffnungen können fertigungstechnisch leicht, beispielsweise durch Stanzen, realisiert werden.

Vorteilhafterweise weisen die Befestigungsöffnungen jeweils eine umlaufende Dichtung auf, so dass keine unerwünschten Medien wie Staub und Wasser ins Geräteinnere eindringen können.

Bevorzugterweise weisen die Fußteile jeweils eine erste Schrägfläche und eine zweite Schrägfläche auf. Der von außen sichtbare Teil der Fußteile ist damit im Wesentlichen dreieckig im Querschnitt. Im vollständig eingeführten, verriegelten Zustand stützt sich die zweite Schrägfläche innenseitig an der Gerätewand ab. Dabei steht die zweite Schrägfläche in einem spitzen Winkel zu der Gerätewand. Durch die oben beschriebene Wirkverbindung des Fußteils mit einer Feder, wird permanent vom Fußteil, eine im Wesentlichen nach außen (orthogonal zur Gerätewand) gerichtete Kraft, auf die Gerätewand ausgeübt, wodurch eine sichere Fixierung des Anbaugehäuses gewährleistet ist.

Über die erste Schrägfläche wird das Fußteil, beim Einführen des Schnappbefestigungsmittels in die Befestigungsöffnung, in den kastenförmigen Grundkörper hineingedrückt. Daher ist es vorteilhaft, wenn die erste Schrägfläche in einem stumpferen Winkel als die zweite Schrägfläche zu der Gerätewand steht.

Das oben beschriebene Anbaugehäuse wird wie folgt an einer Gerätewand installiert: Zunächst werden die Befestigungsöffnungen des Anbaugehäuses zu entsprechenden Befestigungsöffnungen in der Gerätewand fluchtend ausgerichtet. Anschließend werden in die zueinander fluchtenden Befestigungsöffnungen Schnappbefestigungsmittel eingeführt.

Beim Einführen gleitet zunächst die erste Schrägfläche des jeweiligen Fußteils an dem zugeordneten Rand der Befestigungsöffnung entlang. Dabei wird das jeweilige Fußteil gegen die Wirkung der Federkraft in den kastenförmigen Gehäusekörper des Schnappbefestigungsmittels eingedrückt. Nachdem das Schnappbefestigungsmittel vollständig in die Befestigungsöffnung eingeführt ist, schnappt das jeweilige Fußteil zurück. Dann stützt sich die zweite Schrägfläche an der Gerätewand ab.

Die Fußteile können händisch oder über einen Mechanismus ins Innere des kastenförmigen Grundkörpers gedrückt werden. Dann können die Schnappbefestigungsmittel aus den Befestigungsöffnungen entnommen und das Anbaugehäuse von der Gerätewand abgenommen werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Anbaugehäuses,
- Fig. 2: eine perspektivische Darstellung eines Schnappbefestigungsmittels,
- Fig. 3: eine vereinfachte Seitenansicht des Schnappbefestigungsmittels,
- Fig. 4: Schnittdarstellung des Anbaugehäuses im Befestigungsbereich und
- Fig. 5: eine perspektivische Schnittdarstellung des Anbaugehäuses im Befestigungsbereich ohne Schnappbefestigungsmittel.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

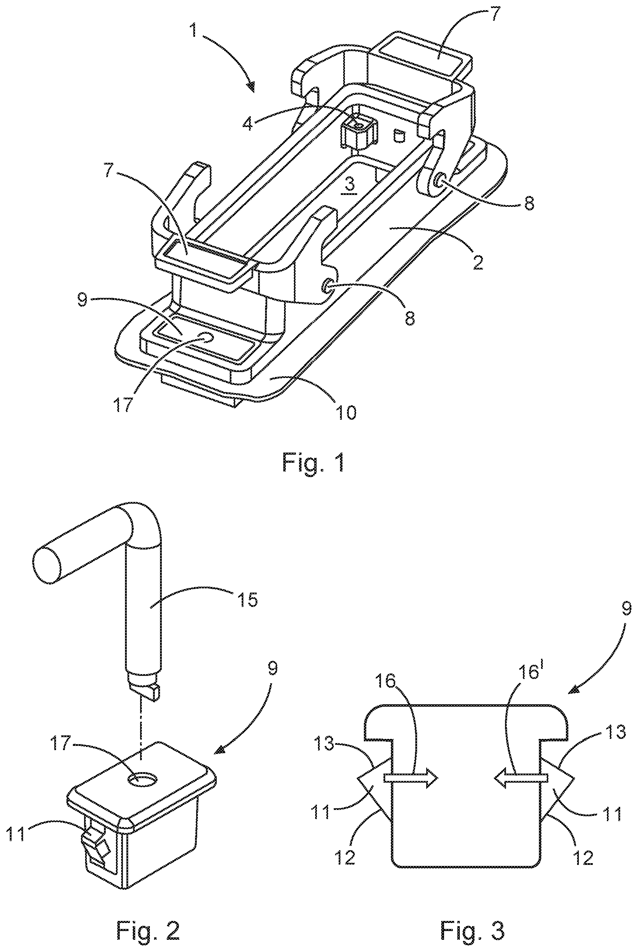

In Figur 1 ist ein erfindungsgemäßes Anbaugehäuse 1 perspektivisch gezeigt. Das Anbaugehäuse 1 weist eine rahmenförmige Grundform 2 mit einem Aufnahmebereich 3 auf. In den Aufnahmebereich 3 wird ein Kontakteinsatz oder ein mit Steckverbindermodulen bestückter Halterahmen befestigt. Dafür sind in den Eckbereichen des Aufnahmebereichs 3 Schrauböffnungen 4 vorgesehen. Aus darstellerischen Gründen wird in den Figuren kein Kontakteinsatz oder bestückten Halterahmen gezeigt.

An den der rahmenförmigen Grundform 2 sind zwei Befestigungsflächen 5 angeformt. In den Befestigungsflächen 5 ist jeweils eine rechteckige Befestigungsöffnung 6 vorgesehen. Die Befestigungsflächen 5 stehen außenseitig von der rahmenförmigen Grundform 2 ab und sind etwa senkrecht zu dieser angeordnet.

Im oberen Bereich der Schmalseiten der rahmenförmigen Grundform sind Verriegelungsbügel 7 auf an den Breitseiten angeformten Zapfen 8 schwenkbar gelagert.

In den Figuren 2 und 3 ist das Schnappbefestigungsmittel 9 gezeigt, mit welchem das Anbaugehäuse 1 an einer Gerätewand 10 reversibel befestigt werden kann. Die nach außen weisende Fläche des kastenförmigen Grundkörpers weist eine Werkzeugöffnung 17 auf. Durch Einfügen eines Werkzeugs 15 in diese Werkzeugöffnung 17 können die Fußteile 11, über eine nicht gezeigte Mechanik, in Richtung der Pfeile 16, 16' ins Innere des Grundkörpers zurückgeführt werden. Anschließend kann das Anbaugehäuse 1 von der Gerätewand 10 entfernt werden. Als Werkzeug können beispielsweise handelsübliche Schraubendreher oder Imbusschlüssel verwendet werden, die die allermeisten Industriemechaniker/innen stets zur Hand haben.

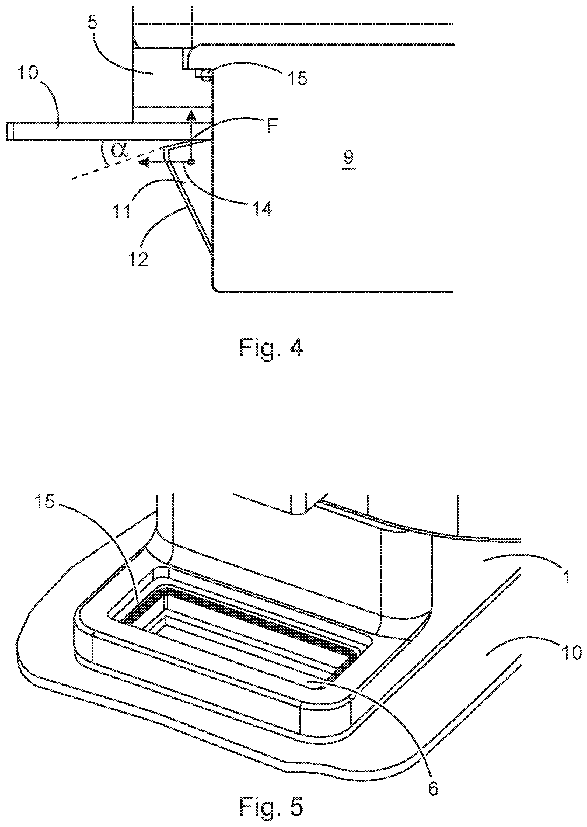

In Figur 4 ist eine Schnittdarstellung des Anbaugehäuses 1 im Befestigungsbereich zu sehen. Wenn das Anbaugehäuse 1 an einer Gerätewand 10 befestigt ist, sind in den Befestigungsöffnungen 6 Schnappbefestigungsmittel 9 angeordnet. In den Befestigungsöffnungen 6 sind Dichtungen vorgesehen, die ein Eindringen von Medien in das Gerätegehäuse verhindern.

Die Schnappbefestigungsmittel 9 weisen einen kastenförmigen Grundkörper auf, wobei aus den sich gegenüberliegenden Schmalflächen des kastenförmigen Grundkörpers federnd gelagerte und sich an der Gerätewand abstützende Fußteile 11 herausragen. Die Fußteile 11 weisen jeweils eine erste Schrägfläche 12 und eine zweite Schrägfläche 13 auf, wobei sich die zweite Schrägfläche 13, im fixierten Zustand, an der Gerätewand 10 abstützt.

Im fixierten Zustand stehen Gerätewand 10 und die zweite Schrägfläche 13 in einem spitzen Winkel α zueinander. Durch die federnde Lagerung der Fußteile 11 werden diese stetig nach außen, in Richtung des Pfeils 14, gedrückt. Die zweite Schrägfläche 13 drückt dadurch permanent mit einer in Pfeilrichtung F resultierenden Kraft gegen die Gerätewand 10. Hierdurch wird eine sichere Fixierung des Anbaugehäuses 1 an der Gerätewand 10 sichergestellt.

Durch eine Veränderung des Winkels α bzw. der Schrägfläche 13 kann sowohl der Toleranzbereich der Andruckkraft vergrößert oder verkleinert werden. Auch durch die Vorspannkraft der Feder kann der Anpressdruck des Anbaugehäuses an die Gehäuse- bzw. Gerätewand variiert werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Anbaugehäuse
- 2: Rahmenförmiger Grundkörper
- 3: Aufnahmebereich
- 4: Schrauböffnung
- 5: Befestigungsfläche
- 6: Befestigungsöffnung
- 7: Verriegelungsbügel
- 8: Zapfen
- 9: Schnappbefestigungsmittel
- 10: Gerätewand
- 11: Fußteil
- 12: Erste Schrägfläche
- 13: Zweite Schrägfläche
- 14: Pfeil
- 15: Werkzeug
- 16: Pfeil
- 17: Werkzeugöffnung
- α: Winkel
- F: Pfeil

## Patentansprüche

1. Anbaugehäuse (1) mit einer rahmenförmigen Grundform (2),
welche einen Aufnahmebereich (3), zur Aufnahme eines Kontakteinsatzes oder eines mit Steckverbindermodulen bestückten Halterahmens, umschließt,
wobei an der rahmenförmigen Grundform (2) außenseitig zumindest zwei Befestigungsflächen (5) mit Befestigungsöffnungen (6) angeformt sind,
wobei das Anbaugehäuse (1) Schnappbefestigungsmittel (9) aufweist, die, zur mechanischen Befestigung des Anbaugehäuses (1) an einem Wanddurchbruch einer Gerätewand (10), die Befestigungsöffnungen (6) durchgreifen
**dadurch gekennzeichnet, dass**
die Schnappbefestigungsmittel (9) jeweils einen kastenförmigen Grundkörper aufweisen, wobei aus den sich gegenüberliegenden Schmalflächen des kastenförmigen Grundkörpers federnd gelagerte Fußteile (11) vorstehen, die so ausgebildet sind, dass sie an der Gerätewand (10) herausragen.

2. Anbaugehäuse nach Anspruch 1
**dadurch gekennzeichnet, dass**
die Befestigungsflächen (5) an den Schmalseiten des Anbaugehäuses (1) angeformt sind.

3. Anbaugehäuse nach vorstehendem Anspruch
**dadurch gekennzeichnet, dass**
die Befestigungsöffnungen (6) rechteckig ausgebildet sind.

4. Anbaugehäuse nach einem der vorstehenden Ansprüche
**dadurch gekennzeichnet, dass**
die Befestigungsöffnungen (6) jeweils eine umlaufende Dichtung (15) aufweisen.

5. Anbaugehäuse nach Anspruch 1
**dadurch gekennzeichnet, dass**
die Fußteile (11) jeweils eine erste Schrägfläche (12) und eine zweite Schrägfläche (13) aufweisen, wobei sich die zweite Schrägfläche (13) so ausgebildet ist, dass sie an der Gerätewand (10) anliegt.

6. Anbaugehäuse nach vorstehendem Anspruch
**dadurch gekennzeichnet, dass**
die zweite Schrägfläche (13) in einem spitzen Winkel (α) zu der Gerätewand (10) steht.

7. Anbaugehäuse nach einem der beiden vorstehenden Ansprüche
**dadurch gekennzeichnet, dass**
die Schnappbefestigungsmittel (9) einen über ihre nach außen gerichtete Fläche zugänglichen Mechanismus aufweisen, mit welchem die Fußteile (11) in den kastenförmigen Grundkörper führbar sind.

8. Verfahren zur Befestigung eines Anbaugehäuses (1) an einem Wanddurchbruch einer Gerätewand (10), wobei das Anbaugehäuse (1) Befestigungsöffnungen (6) aufweist, welche mit entsprechenden Befestigungsöffnungen in der Gerätewand (10) fluchten,
wobei in die zueinander fluchtenden Befestigungsöffnungen (6) des Anbauflansches und der Gerätewand Schnappbefestigungsmittel (9) mit einem kastenförmigen Grundkörper und mit seitlich davon abstehenden, sich gegenüberliegenden und federnd gelagerten Fußteilen (11) eingeführt werden,
wobei die Fußteile (11) beim Einführen in die Befestigungsöffnungen (6) zunächst in den kastenförmigen Grundkörper hineingepresst werden und sich anschließend an der Gerätewand (10) abstützen.

9. Verfahren zur Befestigung eines Anbaugehäuses (1) an einem Wanddurchbruch einer Gerätewand (10) nach vorstehendem Anspruch,
wobei die Fußteile (11) eine erste Schrägfläche (12) und eine zweite Schrägfläche (13) aufweisen und wobei beim Einführen zunächst die erste Schrägfläche (12) am Rand der jeweiligen Befestigungsöffnung (6) entlanggleitet und sich anschließend die zweite Schrägfläche (13) an der Gerätewand (10) abstützt.

## Claims

1. Mounting housing having a frame-shaped basic form which encloses a receiving area for receiving a contact insert or a holding frame equipped with connector modules, wherein at least two fastening surfaces with fastening openings are formed on the outside of the frame-shaped basic form, wherein the mounting housing has snap fastening means which pass through the fastening openings for mechanically fastening the mounting housing to a wall opening of a device wall, **characterized in that** the snap fastening means each have a box-shaped base body, wherein spring-mounted foot parts protrude from the opposing narrow surfaces of the box-shaped base body, which are designed such that they protrude at the device wall.

2. Mounting housing according to claim 1, **characterized in that** the fastening surfaces are formed on the narrow sides of the mounting housing.

3. Mounting housing according to the preceding claim, **characterized in that** the fastening openings are rectangular.

4. Mounting housing according to one of the preceding claims, **characterized in that** the fastening openings each have a circumferential seal.

5. Mounting housing according to claim 1, **characterized in that** the foot parts each have a first inclined surface and a second inclined surface, wherein the second inclined surface is designed such that it rests against the device wall.

6. Mounting housing according to the preceding claim, **characterized in that** the second inclined surface is at an acute angle to the device wall.

7. Mounting housing according to one of the two preceding claims, **characterized in that** the snap fastening means have a mechanism accessible via their outwardly directed surface, by means of which the foot parts can be guided into the box-shaped base body.

8. Method for fastening a mounting housing to a wall opening of a device wall, wherein the mounting housing has fastening openings which are aligned with corresponding fastening openings in the device wall, wherein snap fastening means having a box-shaped base body and laterally protruding, opposing and spring-mounted foot parts are inserted into the mutually aligned fastening openings of the mounting flange and the device wall, wherein the foot parts are first pressed into the box-shaped base body when being inserted into the fastening openings and subsequently rest against the device wall.

9. Method for fastening a mounting housing to a wall opening of a device wall according to the preceding claim, wherein the foot parts have a first inclined surface and a second inclined surface, and wherein during insertion the first inclined surface first slides along the edge of the respective fastening opening and subsequently the second inclined surface rests against the device wall.

## Revendications

1. Boîtier de montage présentant une forme de base en cadre qui entoure une zone de réception pour recevoir un insert de contact ou un cadre de maintien équipé de modules de connecteur, dans lequel au moins deux surfaces de fixation avec des ouvertures de fixation sont formées sur l'extérieur de la forme de base en cadre, dans lequel le boîtier de montage présente des moyens de fixation à encliquetage qui traversent les ouvertures de fixation pour la fixation mécanique du boîtier de montage à une ouverture murale d'une paroi d'appareil, **caractérisé en ce que** les moyens de fixation à encliquetage présentent chacun un corps de base en forme de boîte, dans lequel des parties de pied montées sur ressort font saillie des surfaces étroites opposées du corps de base en forme de boîte, lesquelles sont conçues de manière à faire saillie au niveau de la paroi d'appareil.

2. Boîtier de montage selon la revendication 1, **caractérisé en ce que** les surfaces de fixation sont formées sur les côtés étroits du boîtier de montage.

3. Boîtier de montage selon la revendication précédente, **caractérisé en ce que** les ouvertures de fixation sont rectangulaires.

4. Boîtier de montage selon l'une des revendications précédentes, **caractérisé en ce que** les ouvertures de fixation présentent chacune un joint périphérique.

5. Boîtier de montage selon la revendication 1, **caractérisé en ce que** les parties de pied présentent chacune une première surface inclinée et une deuxième surface inclinée, dans lequel la deuxième surface inclinée est conçue de manière à reposer contre la paroi d'appareil.

6. Boîtier de montage selon la revendication précédente, **caractérisé en ce que** la deuxième surface inclinée forme un angle aigu avec la paroi d'appareil.

7. Boîtier de montage selon l'une des deux revendications précédentes, **caractérisé en ce que** les moyens de fixation à encliquetage présentent un mécanisme accessible par leur surface dirigée vers l'extérieur, au moyen duquel les parties de pied peuvent être guidées dans le corps de base en forme de boîte.

8. Procédé de fixation d'un boîtier de montage à une ouverture murale d'une paroi d'appareil, dans lequel le boîtier de montage présente des ouvertures de fixation qui sont alignées avec des ouvertures de fixation correspondantes dans la paroi d'appareil, dans lequel des moyens de fixation à encliquetage présentant un corps de base en forme de boîte et des parties de pied opposées, faisant saillie latéralement et montées sur ressort sont insérés dans les ouvertures de fixation mutuellement alignées de la bride de montage et de la paroi d'appareil, dans lequel les parties de pied sont d'abord pressées dans le corps de base en forme de boîte lors de l'insertion dans les ouvertures de fixation et reposent ensuite contre la paroi d'appareil.

9. Procédé de fixation d'un boîtier de montage à une ouverture murale d'une paroi d'appareil selon la revendication précédente, dans lequel les parties de pied présentent une première surface inclinée et une deuxième surface inclinée, et dans lequel lors de l'insertion, la première surface inclinée glisse d'abord le long du bord de l'ouverture de fixation respective et ensuite la deuxième surface inclinée repose contre la paroi d'appareil.
